# EUROPEAN PATENT APPLICATION

(11) **EP 0 837 126 A2**
(43) Date of publication of application: **22.04.1998**
(21) Application number: 97117075.8
(22) Date of filing: 01.10.1997
(51) Int. Cl.: C12G 3/02

(54) **Process for the production of alcoholic coffee drinks**

(30) Priority: 15.10.1996 JP 291206/96
(71) Applicant: Hagiwara, Yoshihide, Takarazuka-shi Hyogo-ken (JP)
(72) Inventor: Hagiwara, Yoshihide, Takarazuka-shi Hyogo-ken (JP)
(74) Representative: Weisert, Annekäte, Dipl.-Ing. Dr.-Ing.

(57) **Abstract**

This invention provides a process for the production of alcohol coffee drinks which comprises the steps of adding a saccharide to an extraction residue of roasted coffee beans and fermenting the resulting mixture with the aid of a yeast for the brewing of alcoholic liquors. According to this process, alcoholic drinks having a rich aroma of coffee can be produced.

## Description

This invention relates to a process for the production of alcoholic drinks having a rich aroma of coffee by utilizing an extraction residue of roasted coffee beans which is yielded in large amounts in the making of instant coffee, coffee drinks and the like.

Instant coffee is usually made by subjecting roasted and ground coffee beans to multistage extraction at high temperature and high pressure in a tubular extractor, filtering the resulting highly concentrated extract, and cooling and spray-drying the filtrate. On the other hand, coffee drinks, as typified by canned coffee, are made by grinding roasted coffee beans, extracting the resulting powder with hot water or subjecting it to multistage extraction at high temperature and high pressure, and adding a sweetener, a perfume and an emulsifier to the resulting extract.

Thus, in the making of making of instant coffee and coffee drinks, a large amount of residue is left after coffee extract is prepared from roasted coffee beans. At present, there is no use for this extraction residue, so that most of it is dumped.

The present inventor has made an investigation on the effective utilization of an extraction residue of roasted coffee beans which is usually dumped. As a result, it has unexpectedly been found that, if an extraction residue of roasted coffee beans is supplemented with a saccharide and fermented with the aid of a yeast for the brewing of alcoholic liquors (e.g., wine yeast), the alcoholic fermentation causes the aroma of coffee to be developed again in spite of the substantial absence of coffee extract in the extraction residue used as the raw material, and an alcoholic drink having a rich aroma of coffee and an excellent taste is obtained. The present invention has been completed on the basis of this finding.

Thus, the present invention provides a process for the production of alcoholic drinks which comprises the steps of adding a saccharide to an extraction residue of roasted coffee beans and fermenting the resulting mixture with the aid of a yeast for the brewing of alcoholic liquors.

The extraction residue of roasted coffee beans which is used as the raw material in the process of the present invention comprises grounds left after coffee extract is prepared from roasted coffee beans or a ground product thereof. Specific examples thereof include a residue left after roasted coffee beans or a ground product thereof is extracted with hot water or an aqueous solution of an alcohol such as methanol or ethanol; and a residue left after a hot water extract of roasted coffee beans is further extracted with an aqueous solution of an alcohol such as methanol or ethanol.

The extraction residue of roasted coffee beans consists essentially of polysaccharides, proteins, inorganic salts, caffeine and the like, and its content of carbon sources is insufficient for purposes of alcoholic fermentation. Accordingly, a saccharide serving as a carbon source is added to the extraction residue so as to provide a carbon-to-nitrogen (C/N) ratio suitable for alcoholic fermentation. For the purpose of supplementation with a carbon source, any saccharide that can be assimilated by the yeast used for fermentation may be employed without particular limitation. However, preferred examples thereof include glucose, fructose, sucrose, maltose, invert sugar, honey, fruit juice extract and blackstrap molasses. Although the amount of saccharide added may vary according to the type of the extraction residue used as the raw material, the type of yeast used, and other factors, it is generally used in such a proportion that the weight ratio of the extraction residue of roasted coffee beans to the saccharide is in the range of 10/1 to 1/100 and preferably 5/1 to 1/50.

To the aforesaid extraction residue supplemented with the saccharide, other nutrients necessary for the growth of the yeast can further be added. Such nutrients include, for example, organic materials such as yeast extract, malt extract, defatted soybean meal, soybean flour, wheat bran extract, rice bran extract, defatted embryo buds, defatted corn meal and defatted peanut meal; and inorganic materials such as KH₂PO₄, (NH₄)₂SO₄ and MgSO₄. These ingredients are dissolved or dispersed in water to prepare a culture medium. Furthermore, in order to hydrolyze polysaccharides, proteins and like substances present in the extraction residue, hydrolases such as Biodiastase (trade name; manufactured by Amano Pharmaceutical Co., Ltd.) and Kleistase (trade name; manufactured by Daiwa Chemical Industry Co., Ltd.) may suitably be added to the culture medium.

On the other hand, the yeasts which can be used to ferment the aforesaid culture medium are yeasts commonly used in the brewing of alcoholic liquors such as wine, sake, beer and spirits (hereinafter referred to as alcoholic yeasts). Specific examples of sake yeast include stains of Saccharomyces cerevisiae such as Kyokai No. 6 yeast, Kyokai No. 7 yeast, Kyokai No. 9 yeast and Kyokai No. 11 yeast; specific examples of wine yeast include Saccharomyces cerevisiae W-3, S. cerevisiae KW-3 and S. cerevisiae OC-2; specific examples of beer yeast include top yeasts such as Saccharomyces cerevisiae IAM-4954 and various bottom yeasts; and specific examples of spirit yeast include strains of Saccharomyces cerevisiae such as Kyokai No. 2 spirit yeast. Among others, wine yeast is especially preferred.

In using such an alcoholic yeast, it is usually inoculated into malt juice, a solution of saccharified cereals, an extract of wheat bran, fruit juice or the like, and incubated at a temperature of about 5 to about 30°C, preferably about 10 to 25°C, for a period of about 2 to about 10 days to prepare a yeast culture in advance. Then, the aforesaid culture medium is inoculated with the yeast culture, usually in an amount of about 1 to about 20% by volume and preferably about 2 to about 10% by volume, and incubated at a temperature of about 2 to about 30°C and preferably about 5 to about 25°C until a desired alcohol concentration is reached, usually for a period of 5 to 20 days.

After completion of the fermentation, microbial cells and other insoluble materials are removed from the resulting culture by filtration, centrifugation or the like. The liquid so prepared may be treated according to a per se known procedure to obtain an alcoholic coffee drink. By way of example, this can be done by adding thereto a clarifying agent (e.g., bentonite or gelatin-tannin) at a concentration of about 0.01 to 2% by weight, stirring the resulting mixture, filtering it after the addition of a filter aid (e.g., celite or talc), and subjecting the filtrate to additional treatments (e.g., adjustment of alcohol content, pasteurization, and sterilization by filtration) as required.

The alcoholic coffee drinks produced according to the present invention cannot only be drunk as alcoholic beverages, but can also be used, for example, as alcoholic liquors for cooking use, as raw materials for the making of confectionery, and as ingredients of cocktails and refreshing drinks.

The present invention is more specifically explained with reference to the following examples.

### Example 1

The spray-dried product (hereinafter referred to as COE) of an extraction residue left after the spray-dried product of a hot water extract of roasted coffee beans was extracted with a 70% aqueous solution of ethanol was used as a raw material. Using this raw material, culture media having the basic compositions shown in Table 1 below were prepared, and 2 g/l of yeast extract (manufactured by DIFCO LABORATORIES Co.), 1 g/l of KH₂PO₄ (manufactured by Hayashi Pure Chemical Industry Co., Ltd.), 0.5 g/l of (NH₄)₂SO₄ (manufactured by Hayashi Pure Chemical Industry Co., Ltd.) and 0.24 g/l of MgSO₄ (manufactured by Hayashi Pure Chemical Industry Co., Ltd.) were added thereto. Each culture medium was adjusted to a pH of about 5.2 with 1N hydrochloric acid, and 80 ml of it was poured into a 100 ml Erlenmeyer flask and sterilized under pressure at 121°C for 15 minutes. Then, each culture medium was inoculated with wine yeast (Saccharomyces cerevisiae) and incubated at 20-22°C for 7 days. After completion of the fermentation, the resulting culture was centrifuged at 7,000 rpm for 10 minutes and the supernatant was recovered.

The color, smell and taste of the coffee wines so made were evaluated and their ethanol contents were measured. The results thus obtained are shown in Table 2. For purposes of preservation, they were sterilized by heating at 60°C for 2 minutes.

**Table 1**

| Basic compositions of culture media for the making of coffee wines | | |
|---|---|---|
| Composition of culture medium | A-1 | A-2 |
| COE | 1.0 g | 1.5 g |
| Glucose | 20 g | 20 g |
| Total volume | 100 ml | 100 ml |

**Table 2**

| Results of evaluation of coffee wines* | | | | | |
|---|---|---|---|---|---|
| Culture medium | Color | Smell | Taste | Ethanol content** | pH |
| A-1 | Coffee color | Coffee-like aroma | Coffee-like taste having sourness and sweetness | 8.5% | 3.7 |
| A-2 | Coffee color | Coffee-like aroma | Coffee-like taste having slight sweetness | 8.7% | 4.0 |

| | | | | | |
|---|---|---|---|---|---|
| ∗ Average values for 2 samples. | | | | | |
| ∗∗ Ethanol was determined according to the distillation method described in An Explanation of the Twelfth Revised Japanese Pharmacopoeia, General Principles, Common Rules for Pharmaceutical Preparations, General Testing Methods, B-11 (1991, Hirokawa Shoten). | | | | | |

### Example 2

The spray-dried product (hereinafter referred to as COE) of an extraction residue left after the spray-dried product of a hot water extract of roasted coffee beans was extracted with a 75% aqueous solution of ethanol, and an enzyme-treated preparation (hereinafter referred to as COE-E) obtained by adding 0.02 g of Kleistase (trade name; manufactured by Daiwa Chemical Co., Ltd.) and 0.02 g of Biodiastase (trade name; manufactured by Amano Pharmaceutical Co., Ltd.) to 100 g of COE and incubating this mixture at 50°C for 1 hour, were used as raw materials. Using these raw materials, culture media (B-1, B-2, C-1, C-2, 2B and 2C) having the basic compositions shown in Table 3 below were prepared, and 2 g/l of yeast extract (manufactured by DIFCO LABORATORIES Co.), 1 g/l of KH₂PO₄ (manufactured by Hayashi Pure Chemical Industry Co., Ltd.), 0.5 g/l of (NH₄)₂SO₄ (manufactured by Hayashi Pure Chemical Industry Co., Ltd.) and 0.24 g/l of MgSO₄ (manufactured by Hayashi Pure Chemical Industry Co., Ltd.) were added thereto. Each culture medium was adjusted to a pH of about 5.2 with 1N hydrochloric acid, and 80 ml of it was poured into a 100 ml Erlenmeyer flask and sterilized under pressure at 121°C for 15 minutes. Then, each culture medium was inoculated with wine yeast (Saccharomyces cerevisiae) and incubated at 20-22°C for 7 days. After completion of the fermentation, the resulting culture was centrifuged at 7,000 rpm for 10 minutes and the supernatant was recovered. The color, smell and taste of the coffee wines so made were evaluated by organoleptic tests and their ethanol contents were measured.

The results thus obtained are shown in Table 4.

**Table 3**

| Basic compositions of culture media for the making of coffee wines | | | | | | |
|---|---|---|---|---|---|---|
| Composition of culture medium | B-1 | B-2 | C-1 | C-2 | 2B | 2C |
| COE | 2.5 g | 2.5 g | - | - | 5 g | - |
| COE-E | - | - | 2.5 g | 2.5 g | - | 5 g |
| Glucose | 10 g | 20 g | 10 g | 20 g | 25 g | 25 g |
| Total volume | 100 ml | 100 ml | 100 ml | 100 ml | 100 ml | 100 ml |

**Table 4**

| Results of evaluation of coffee wines*¹ | | | | | |
|---|---|---|---|---|---|
| Culture medium | Color | Smell | Taste | Ethanol content** | pH |
| B-1 | Coffee color | Coffee-like aroma | Coffee-like vinous taste having sourness | 5.5% | 4.1 |
| B-2 | Coffee color | Coffee-like aroma | Coffee-like vinous taste having slight sweetness | 8.7% | 4.1 |
| C-1 | Coffee color | Coffee-like aroma | Coffee-like vinous taste having sourness | 5.7% | 4.2 |
| C-2 | Coffee color | Coffee-like aroma | Coffee-like vinous taste having slight sweetness | 9.1% | 4.1 |
| 2B | Coffee color | Coffee-like aroma | Coffee-like vinous taste having sweetness | 10.8% | 4.4 |
| 2C | Coffee color | Coffee-like aroma | Coffee-like vinous taste having somewhat strong sweetness | 11.3% | 4.4 |

| | | | | | |
|---|---|---|---|---|---|
| ∗ Average values for 2 samples. | | | | | |
| ∗∗ Ethanol was determined according to the distillation method described in An Explanation of the Twelfth Revised Japanese Pharmacopoeia, General Principles, Common Rules for Pharmaceutical Preparations, General Testing Methods, B-11 (1991, Hirokawa Shoten). | | | | | |

### Example 3

The spray-dried product (hereinafter referred to as COM) of an extraction residue left after the spray-dried product of a hot water extract of roasted coffee beans was extracted with a 75% aqueous solution of methanol was used as a raw material. Using this raw material, culture media having the basic compositions shown in Table 5 below were prepared, and 2 g/l of yeast extract (manufactured by DIFCO LABORATORIES Co.), 1 g/l of KH₂PO₄ (manufactured by Hayashi Pure Chemical Industry Co., Ltd.), 0.5 g/l of (NH₄)₂SO₄ (manufactured by Hayashi Pure Chemical Industry Co., Ltd.) and 0.24 g/l of MgSO₄ (manufactured by Hayashi Pure Chemical Industry Co., Ltd.) were added thereto. Each culture medium was adjusted to a pH of about 5.2 with 1N hydrochloric acid, and 80 ml of it was poured into a 100 ml Erlenmeyer flask and sterilized under pressure at 121°C for 15 minutes. Then, each culture medium was inoculated with wine yeast (Saccharomyces cerevisiae) and incubated at 20-22°C for 7 days. After completion of the fermentation, the resulting culture was centrifuged at 7,000 rpm for 10 minutes and the supernatant was recovered.

The coffee wines so made were evaluated by organoleptic tests and their ethanol contents were measured. The results thus obtained are shown in Table 6.

**Table 5**

| Basic compositions of culture media for the making of coffee wines | | |
|---|---|---|
| Composition of culture medium | D-1 | D-2 |
| COM | 1.0 g | 1.5 g |
| Glucose | 20 g | 20 g |
| Total volume | 100 ml | 100 ml |

**Table 6**

| Results of evaluation of coffee wines* | | | | | |
|---|---|---|---|---|---|
| Culture medium | Color | Smell | Taste | Ethanol content** | pH |
| D-1 | Coffee color | Coffee-like aroma | Coffee-like taste having sourness and sweetness | 8.2% | 3.8 |
| D-2 | Coffee color | Coffee-like aroma | Coffee-like taste having slight sweetness | 8.3% | 4.1 |

| | | | | | |
|---|---|---|---|---|---|
| ∗ Average values for 2 samples. | | | | | |
| ∗∗ Ethanol was determined according to the distillation method described in An Explanation of the Twelfth Revised Japanese Pharmacopoeia, General Principles, Common Rules for Pharmaceutical Preparations, General Testing Methods, B-11 (1991, Hirokawa Shoten). | | | | | |

### Example 4

The spray-dried product (hereinafter referred to as COM) of an extraction residue left after the spray-dried product of a hot water extract of roasted coffee beans was extracted with a 80% aqueous solution of methanol, and an enzyme-treated preparation (hereinafter referred to as COM-E) obtained by adding 0.02 g of Kleistase (trade name; manufactured by Daiwa Chemical Co., Ltd.) and 0.02 g of Biodiastase (trade name; manufactured by Amano Pharmaceutical Co., Ltd.) to 100 g of COM and incubating this mixture at 50°C for 1 hour, were used as raw materials. Using these raw materials, culture media (E-1, E-2, F-1, F-2, 2E and 2F) having the basic compositions shown in Table 7 below were prepared, and 2 g/l of yeast extract (manufactured by DIFCO LABORATORIES Co.), 1 g/l of KH₂PO₄ (manufactured by Hayashi Pure Chemical Industry Co., Ltd.), 0.5 g/l of (NH₄)₂SO₄ (manufactured by Hayashi Pure Chemical Industry Co., Ltd.) and 0.24 g/l of MgSO₄ (manufactured by Hayashi Pure Chemical Industry Co., Ltd.) were added thereto. Each culture medium was adjusted to a pH of about 5.2 with 1N hydrochloric acid, and 80 ml of it was poured into a 100 ml Erlenmeyer flask and sterilized under pressure at 121°C for 15 minutes. Then, each culture medium was inoculated with wine yeast (Saccharomyces cerevisiae) and incubated at 20-22°C for 7 days. After completion of the fermentation, the resulting culture was centrifuged at 7,000 rpm for 10 minutes and the supernatant was recovered. The coffee wines so made were evaluated by organoleptic tests and their ethanol contents were measured. The results thus obtained are shown in Table 8.

**Table 7**

| Basic compositions of culture media for the making of coffee wines | | | | | | |
|---|---|---|---|---|---|---|
| Composition of culture medium | E-1 | E-2 | F-1 | F-2 | 2E | 2F |
| COM | 2.5 g | 2.5 g | - | - | 5 g | - |
| COM-E | - | - | 2.5 g | 2.5 g | - | 5 g |
| Glucose | 10 g | 20 g | 10 g | 20 g | 25 g | 25 g |
| Total volume | 100 ml | 100 ml | 100 ml | 100 ml | 100 ml | 100 ml |

**Table 8**

| Results of evaluation of coffee wines* | | | | | |
|---|---|---|---|---|---|
| Culture medium | Color | Smell | Taste | Ethanol content** | pH |
| E-1 | Coffee color | Coffee-like aroma | Coffee-like vinous taste having sourness | 5.2% | 4.0 |
| E-2 | Coffee color | Coffee-like aroma | Coffee-like vinous taste having slight sweetness | 8.3% | 4.1 |
| F-1 | Coffee color | Coffee-like aroma | Coffee-like vinous taste having sourness | 5.5% | 4.1 |
| F-2 | Coffee color | Coffee-like aroma | Coffee-like vinous taste having slight sweetness | 8.7% | 3.8 |
| 2E | Coffee color | Coffee-like aroma | Coffee-like vinous taste having sweetness | 10.8% | 4.3 |
| 2F | Coffee color | Coffee-like aroma | Coffee-like vinous taste having somewhat strong sweetness | 10.2% | 4.2 |

| | | | | | |
|---|---|---|---|---|---|
| ∗ Average values for 2 samples. | | | | | |
| ∗∗ Ethanol was determined according to the distillation method described in An Explanation of the Twelfth Revised Japanese Pharmacopoeia, General Principles, Common Rules for Pharmaceutical Preparations, General Testing Methods, B-11 (1991, Hirokawa Shoten). | | | | | |

### Example 5

The dry powder (hereinafter referred to as COBE) of an extraction residue left after roasted coffee beans were extracted with a 75% aqueous solution of ethanol was used as a raw material. Using this raw material, culture media having the basic compositions shown in Table 9 below were prepared, and 2 g/l of yeast extract (manufactured by DIFCO LABORATORIES Co.), 2 g/l of malt extract powder, 1 g/l of KH₂PO₄ (manufactured by Hayashi Pure Chemical Industry Co., Ltd.), 0.5 g/l of (NH₄)₂SO₄ (manufactured by Hayashi Pure Chemical Industry Co., Ltd.) and 0.24 g/l of MgSO₄ (manufactured by Hayashi Pure Chemical Industry Co., Ltd.) were added thereto. Each culture medium was adjusted to a pH of about 5.2 with 1N hydrochloric acid, and 80 ml of it was poured into a 100 ml Erlenmeyer flask and sterilized under pressure at 121°C for 15 minutes. Then, each culture medium was inoculated with wine yeast (Saccharomyces cerevisiae) and incubated at 20-22°C for 7 days. After completion of the fermentation, the resulting culture was filtered through Toyo No. 5B filter paper (manufactured by Advantec Toyo Kaisha, Ltd.).

The coffee wines so made were evaluated by organoleptic tests and their ethanol contents were measured. The results thus obtained are shown in Table 10.

**Table 9**

| Basic compositions of culture media for the making of coffee wines | | |
|---|---|---|
| Composition of culture medium | G-1 | G-2 |
| COBE | 1.0 g | 1.5 g |
| Glucose | 20 g | 20 g |
| Total volume | 100 ml | 100 ml |

**Table 10**

| Results of evaluation of coffee wines* | | | | | |
|---|---|---|---|---|---|
| Culture medium | Color | Smell | Taste | Ethanol content** | pH |
| G-1 | Light coffee color | Coffee-like aroma | Coffee-like taste having sourness and sweetness | 7.8% | 4.1 |
| G-2 | Light coffee color | Coffee-like aroma | Coffee-like taste having slight sweetness | 8.2% | 4.0 |

| | | | | | |
|---|---|---|---|---|---|
| ∗ Average values for 2 samples. | | | | | |
| ∗∗ Ethanol was determined according to the distillation method described in An Explanation of the Twelfth Revised Japanese Pharmacopoeia, General Principles, Common Rules for Pharmaceutical Preparations, General Testing Methods, B-11 (1991, Hirokawa Shoten). | | | | | |

### Example 6

The dry powder (hereinafter referred to as COBE) of an extraction residue left after roasted coffee beans were extracted with a 70% aqueous solution of ethanol, and an enzyme-treated preparation (hereinafter referred to as COBE-E) obtained by adding 0.02 g of Kleistase (trade name; manufactured by Daiwa Chemical Co., Ltd.) and 0.02 g of Biodiastase (trade name; manufactured by Amano Pharmaceutical Co., Ltd.) to 100 g of the dry powder and incubating this mixture at 70°C for 1 hour, were used as raw materials. Using these raw materials, culture media (H-1, H-2, I-1, I-2, 2H and 2I) having the basic compositions shown in Table 11 below were prepared, and 2 g/l of yeast extract (manufactured by DIFCO LABORATORIES Co.), 2 g/l of malt extract powder, 1 g/l of KH₂PO₄ (manufactured by Hayashi Pure Chemical Industry Co., Ltd.), 0.5 g/l of (NH₄)₂SO₄ (manufactured by Hayashi Pure Chemical Industry Co., Ltd.) and 0.24 g/l of MgSO₄ (manufactured by Hayashi Pure Chemical Industry Co., Ltd.) were added thereto. Each culture medium was adjusted to a pH of about 5.2 with 1N hydrochloric acid, and 80 ml of it was poured into a 100 ml Erlenmeyer flask and sterilized under pressure at 121°C for 15 minutes. Then, each culture medium was inoculated with wine yeast (Saccharomyces cerevisiae) and incubated at 20-22°C for 7 days. After completion of the fermentation, the resulting culture was filtered through Toyo No. 5B filter paper (manufactured by Advantec Toyo Kaisha, Ltd.). The coffee wines so made were evaluated by organoleptic tests and their ethanol contents were measured. The results thus obtained are shown in Table 12.

**Table 11**

| Basic compositions of culture media for the making of coffee wines | | | | | | |
|---|---|---|---|---|---|---|
| Composition of culture medium | H-1 | H-2 | I-1 | I-2 | 2H | 2I |
| COBE | 2.5 g | 2.5 g | - | - | 5 g | - |
| COBE-E | - | - | 2.5 g | 2.5 g | - | 5 g |
| Glucose | 10 g | 20 g | 10 g | 20 g | 25 g | 25 g |
| Total volume | 100 ml | 100 ml | 100 ml | 100 ml | 100 ml | 100 ml |

**Table 12**

| Results of evaluation of coffee wines* | | | | | |
|---|---|---|---|---|---|
| Culture medium | Color | Smell | Taste | Ethanol content** | pH |
| H-1 | Light coffee color | Coffee-like aroma | Coffee-like vinous taste having sourness | 5.2% | 4.0 |
| H-2 | Light coffee color | Coffee-like aroma | Coffee-like vinous taste having slight sweetness | 8.3% | 4.2 |
| I-1 | Light coffee color | Coffee-like aroma | Coffee-like vinous taste having sourness | 5.1% | 4.1 |
| I-2 | Light coffee color | Coffee-like aroma | Coffee-like vinous taste having slight sweetness | 8.7% | 4.2 |
| 2H | Light coffee color | Coffee-like aroma | Coffee-like vinous taste having sweetness | 10.2% | 4.1 |
| 2I | Light coffee color | Coffee-like aroma | Coffee-like vinous taste having somewhat strong sweetness | 11.5% | 4.1 |

| | | | | | |
|---|---|---|---|---|---|
| ∗ Average values for 2 samples. | | | | | |
| ∗∗ Ethanol was determined according to the distillation method described in An Explanation of the Twelfth Revised Japanese Pharmacopoeia, General Principles, Common Rules for Pharmaceutical Preparations, General Testing Methods, B-11 (1991, Hirokawa Shoten). | | | | | |

### Example 7

The dry powder (hereinafter referred to as COBM) of an extraction residue left after roasted coffee beans were extracted with a 75% aqueous solution of methanol was used as a raw material. Using this raw material, culture media having the basic compositions shown in Table 13 below were prepared, and 2 g/l of yeast extract (manufactured by DIFCO LABORATORIES Co.), 2 g/l of defatted soybean meal, 1 g/l of KH₂PO₄ (manufactured by Hayashi Pure Chemical Industry Co., Ltd.), 0.5 g/l of (NH₄)₂SO₄ (manufactured by Hayashi Pure Chemical Industry Co., Ltd.) and 0.24 g/l of MgSO₄ (manufactured by Hayashi Pure Chemical Industry Co., Ltd.) were added thereto. Each culture medium was adjusted to a pH of about 5.2 with 1N hydrochloric acid, and 80 ml of it was poured into a 100 ml Erlenmeyer flask and sterilized under pressure at 121°C for 15 minutes. Then, each culture medium was inoculated with wine yeast (Saccharomyces cerevisiae) and incubated at 20-22°C for 7 days. After completion of the fermentation, the resulting culture was filtered through Toyo No. 5B filter paper (manufactured by Advantec Toyo Kaisha, Ltd.).

The coffee wines so made were evaluated by organoleptic tests and their ethanol contents were measured. The results thus obtained are shown in Table 14.

**Table 13**

| Basic compositions of culture media for the making of coffee wines | | |
|---|---|---|
| Composition of culture medium | J-1 | J-2 |
| COBM | 1.0 g | 1.5 g |
| Glucose | 20 g | 20 g |
| Total volume | 100 ml | 100 ml |

**Table 14**

| Results of evaluation of coffee wines* | | | | | |
|---|---|---|---|---|---|
| Culture medium | Color | Smell | Taste | Ethanol content** | pH |
| J-1 | Light coffee color | Coffee-like aroma | Coffee-like taste having sourness and sweetness | 8.3% | 3.8 |
| J-2 | Light coffee color | Coffee-like aroma | Coffee-like taste having slight sweetness | 8.2% | 4.0 |

| | | | | | |
|---|---|---|---|---|---|
| ∗ Average values for 2 samples. | | | | | |
| ∗∗ Ethanol was determined according to the distillation method described in An Explanation of the Twelfth Revised Japanese Pharmacopoeia, General Principles, Common Rules for Pharmaceutical Preparations, General Testing Methods, B-11 (1991, Hirokawa Shoten). | | | | | |

### Example 8

The dry powder (hereinafter referred to as COBM) of an extraction residue left after roasted coffee beans were extracted with a 80% aqueous solution of ethanol, and an enzyme-treated preparation (hereinafter referred to as COBM-E) obtained by adding 0.02 g of Kleistase (trade name; manufactured by Daiwa Chemical Co., Ltd.) and 0.02 g of Biodiastase (trade name; manufactured by Amano Pharmaceutical Co., Ltd.) to 100 g of COBM and incubating this mixture at 70°C for 1 hour, were used as raw materials. Using these raw materials, culture media (K-1, K-2, L-1, L-2, 2K and 2L) having the basic compositions shown in Table 15 below were prepared, and 2 g/l of yeast extract (manufactured by DIFCO LABORATORIES Co.), 2 g/l of defatted embryo bud extract powder, 1 g/l of KH₂PO₄ (manufactured by Hayashi Pure Chemical Industry Co., Ltd.), 0.5 g/l of (NH₄)₂SO₄ (manufactured by Hayashi Pure Chemical Industry Co., Ltd.) and 0.24 g/l of MgSO₄ (manufactured by Hayashi Pure Chemical Industry Co., Ltd.) were added thereto. Each culture medium was adjusted to a pH of about 5.2 with 1N hydrochloric acid, and 80 ml of it was poured into a 100 ml Erlenmeyer flask and sterilized under pressure at 121°C for 15 minutes. Then, each culture medium was inoculated with wine yeast (Saccharomyces cerevisiae) and incubated at 20-22°C for 5 days. After completion of the fermentation, the resulting culture was filtered through Toyo No. 5B filter paper (manufactured by Advantec Toyo Kaisha, Ltd.). The coffee wines so made were evaluated by organoleptic tests and their ethanol contents were measured. The results thus obtained are shown in Table 16.

**Table 15**

| Basic compositions of culture media for the making of coffee wines | | | | | | |
|---|---|---|---|---|---|---|
| Composition of culture medium | K-1 | K-2 | L-1 | L-2 | 2K | 2L |
| COBM | 2.5 g | 2.5 g | - | - | 5 g | - |
| COBM-E | - | - | 2.5 g | 2.5 g | - | 5 g |
| Glucose | 10 g | 20 g | 10 g | 20 g | 25 g | 25 g |
| Total volume | 100 ml | 100 ml | 100 ml | 100 ml | 100 ml | 100 ml |

**Table 16**

| Results of evaluation of coffee wines* | | | | | |
|---|---|---|---|---|---|
| Culture medium | Color | Smell | Taste | Ethanol content** | pH |
| K-1 | Light coffee color | Coffee-like aroma | Coffee-like vinous taste having sourness | 5.2% | 4.0 |
| K-2 | Light coffee color | Coffee-like aroma | Coffee-like vinous taste having slight sweetness | 8.3% | 4.2 |
| L-1 | Light coffee color | Coffee-like aroma | Coffee-like vinous taste having sourness | 5.5% | 4.1 |
| L-2 | Light coffee color | Coffee-like aroma | Coffee-like vinous taste having slight sweetness | 8.7% | 4.2 |
| 2K | Light coffee color | Coffee-like aroma | Coffee-like vinous taste having sweetness | 10.1% | 4.2 |
| 2L | Light coffee color | Coffee-like aroma | Coffee-like vinous taste having somewhat strong sweetness | 10.2% | 4.2 |

| | | | | | |
|---|---|---|---|---|---|
| ∗ Average values for 2 samples. | | | | | |
| ∗∗ Ethanol was determined according to the distillation method described in An Explanation of the Twelfth Revised Japanese Pharmacopoeia, General Principles, Common Rules for Pharmaceutical Preparations, General Testing Methods, B-11 (1991, Hirokawa Shoten). | | | | | |

### Example 9

A basal culture medium was prepared from 2 g/100 ml of an extraction residue left after a ground product of roasted coffee beans was extracted with hot water and 25 g/100 ml of glucose, and 2 g/l of yeast extract (manufactured by DIFCO LABORATORIES Co.), 2 g/l of defatted embryo bud extract powder, 1 g/l of KH₂PO₄ (manufactured by Hayashi Pure Chemical Industry Co., Ltd.), 0.5 g/l of (NH₄)₂SO₄ (manufactured by Hayashi Pure Chemical Industry Co. , Ltd.) and 0.24 g/l of MgSO₄ (manufactured by Hayashi Pure Chemical Industry Co., Ltd.) were added thereto. The resulting culture medium was adjusted to a pH of about 5.2 with 1N hydrochloric acid, and 80 ml of it was poured into a 100 ml Erlenmeyer flask and sterilized under pressure at 121°C for 15 minutes. Then, the culture medium was inoculated with wine yeast (Saccharomyces cerevisiae) and incubated at 20-22°C for 7 days. After completion of the fermentation, the resulting culture was filtered through Toyo No. 5B filter paper (manufactured by Advantec Toyo Kaisha, Ltd.). The coffee wine so made was evaluated by organoleptic tests and its ethanol content was measured. The results thus obtained are shown in Table 17.

**Table 17**

| Test results of novel coffee wine* | | | | |
|---|---|---|---|---|
| Color | Smell | Taste | Ethanol content** | pH |
| Light coffee color | Coffee-like aroma | Coffee-like taste having sourness and sweetness | 10.5% | 4.0 |

| | | | | |
|---|---|---|---|---|
| ∗ Average values for 2 samples. | | | | |
| ∗∗ Ethanol was determined according to the distillation method described in An Explanation of the Twelfth Revised Japanese Pharmacopoeia, General Principles, Common Rules for Pharmaceutical Preparations, General Testing Methods, B-11 (1991, Hirokawa Shoten). | | | | |

## Claims

1. A process for the production of alcohol coffee drinks which comprises the steps of adding a saccharide to an extraction residue of roasted coffee beans and fermenting the resulting mixture with the aid of a yeast for the brewing of alcoholic liquors.

2. The process of claim 1 wherein the extraction residue of roasted coffee beans comprises grounds left after coffee extract is prepared from roasted coffee beans or a ground product thereof.

3. The process of claim 1 wherein the saccharide is selected from the group consisting of glucose, fructose, sucrose, maltose, invert sugar, honey, fruit juice extract and blackstrap molasses.

4. The process of claim 1 wherein the saccharide is added in such a proportion that the weight ratio of the extraction residue of roasted coffee beans to the saccharide is in the range of 10/1 to 1/100.

5. The process of claim 1 wherein the yeast for the brewing of alcoholic drinks is cultured in a nutrient solution containing, in addition to of the extraction residue of roasted coffee beans to the saccharide, other nutrients necessary for the growth of the yeast.

6. The process of claim 5 wherein a hydrolase is further added to the nutrient solution.

7. The process of claim 1 wherein the yeast for the brewing of alcoholic drinks is wine yeast (Saccharomyces cerevisiae).

8. An alcoholic coffee drink produced by the process of claim 1.
